# EUROPÄISCHE PATENTSCHRIFT

(11) **EP 3 891 563 B1**
(45) Veröffentlichungstag und Bekanntmachung des Hinweises auf die Patenterteilung: **08.01.2025**
(21) Anmeldenummer: 19801549.7
(22) Anmeldetag: 08.11.2019
(51) Int. Cl.: G05B 19/042

(54) **VERFAHREN UND SYSTEM ZUM BEREITSTELLEN VON DATEN FÜR MINDESTENS EINEN DATENEMPFÄNGER**
METHOD AND SYSTEM FOR PROVIDING DATA FOR AT LEAST ONE DATA RECEIVER
PROCÉDÉ ET SYSTÈME DE FOURNITURE DE DONNÉES À AU MOINS UN RÉCEPTEUR DE DONNÉES

(30) Priorität: 05.12.2018 DE 102018220993
(43) Veröffentlichungstag der Anmeldung: 13.10.2021
(73) Patentinhaber: VOLKSWAGEN AKTIENGESELLSCHAFT, 38440 Wolfsburg (DE)
(72) Erfinder: KOCH, Roman, 38100 Braunschweig (DE); ZIMMER-BENTIN, Karl-Dieter, 38106 Braunschweig (DE)
(86) Internationale Anmeldenummer: PCT/EP2019/080715
(87) Internationale Veröffentlichungsnummer: WO 2020/114712

(56) Entgegenhaltungen:
- DE-A1- 102010 029 952
- DE-B3- 102015 219 783
- GB-A- 2 562 471
- US-A1- 2004 138 840
- US-A1- 2009 276 486
- US-A1- 2016 110 243
- US-B2- 8 560 128

## Beschreibung

Die Erfindung betrifft ein Verfahren und ein System zum Bereitstellen von Daten für mindestens einen Datenempfänger.

Mit zunehmendem Einsatz von Sensoren im Alltag und einer zunehmenden Vernetzung von elektronischen Einrichtungen stehen immer größere Mengen an Daten zur Verfügung, welche Datenempfängern zur weiteren Auswertung und Verwertung bereitgestellt werden können. Insbesondere werden solche Daten von Funktionen in Fahrzeugen und Smartphones erfasst bzw. erzeugt und können prinzipiell einer weiteren Nutzung zugeführt werden.

Ein Konfigurieren dieser Funktionen, welche die Daten erzeugen, ist derzeit jedoch nur unbefriedigend gelöst.

Aus der DE 10 2010 029 952 A1 ist ein Verfahren zum Integrieren von zumindest einem Feldgerät in ein Netzwerk der Automatisierungstechnik bekannt; das Netzwerk besteht aus mehreren in einer Automatisierungsanlage verteilt angeordneten Feldgeräten, die über zumindest einen Datenbus, auf dem ein Busprotokoll läuft, miteinander verbunden sind, wobei der Zugriff auf die Feldgeräte über eine Feldzugriffseinheit erfolgt, die mit zumindest einer Automatisierungs-/Integrations-Plattform und zumindest einem WebServer eines Service Providers kommuniziert, wobei von dem Service Provider für jedes Feldgerät ein virtuelles Abbild des Feldgeräts in einer Datenbank bereitgestellt wird, wobei das virtuelle Abbild das in die Automatisierungsanlage zu integrierende Feldgerät umfänglich bezüglich seiner feldgerätespezifischen und applikationsspezifischen Eigenschaften in der Automatisierungsanlage beschreibt, wobei der Service Provider dem Betreiber der Automatisierungsanlage über Cloud-Computing WebServices bzw. Internet-basierte Dienste, automatisch oder auf Anfrage das virtuelle Abbild des Feldgeräts mit den konkreten feldgeräte- und applikationsspezifischen Eigenschaften zur Laufzeit übermittelt und bevorzugt unmittelbar in das Feldgerät überträgt, und wobei das Feldgerät seine Funktion in der Automatisierungsanlage ausführt, sobald es in das Netzwerk integriert wird.

Aus der GB 2 562 471 A ist ein Verfahren zum Anpassen eines Geräts, z.B. ein Küchengerät wie beispielsweise eine Waschmaschine, bekannt, wobei das Gerät in der Lage ist, ein Programm zu implementieren, um eine Betriebsfunktion auszuführen. Es werden mehrere Zustandsdefinitionen gespeichert, z.B. in einem Server, wobei jeder einen oder mehrere Zustände des Geräts definiert. Es werden auch mehrere Programmdefinitionen gespeichert, wobei jede eine Software definiert, die durch das Gerät implementiert werden kann und jede einer oder mehreren der Zustandsdefinitionen entspricht. Daten, z.B. von einem Sensor, die den Betriebszustand des Geräts anzeigen, werden von dem Gerät empfangen und analysiert, um zu identifizieren, ob die empfangenen Daten mit einer der Zustandsdefinitionen übereinstimmen. Wenn dies der Fall ist, wird eine dieser Zustandsdefinition entsprechende Programmdefinition an das Gerät übertragen. Das Programm kann ein angepasstes Firmware-Update sein, um einem Benutzer personalisierte Optionen bereitzustellen oder um einen Fehler zu beheben oder diesem zuvorzukommen.

Aus der DE 10 2015 219 783 B3 ist ein Verfahren für die Steuerung von erfassten Daten von einer Vielzahl von Fahrzeugen bekannt, wobei Daten anonymisiert werden und eine Datenreduktion vorgesehen ist. Die Steuerung besteht zwischen den Einheiten (bspw. Anwendungen, Datenempfänger) jedes Fahrzeuges, zwischen der Vielzahl von Fahrzeugen und einem Backend des Systems, zwischen den Einheiten des Backends und auch möglicherweise zwischen den Einheiten des Backends und mindestens einem externen Dienstanbieter. Die Datenreduktion wird durch die Vermeidung von Übertragung von redundanten Daten bzw. durch die Vermeidung von unnötiger Datenerfassung erreicht.

Aus der US 2016/0110243 A1 ist ein Kollaborationssystem bekannt. Dieses kann ein zerstörungsfreies Prüfgerät umfassen, das mit mindestens einem anderen Computergerät über ein Computernetzwerk kommunizieren kann. Das Computernetzwerk kann mehrere Computergeräte kommunikativ koppeln und das Prüfgerät kann Prüfdaten erfassen, eine Kommunikationsverbindung zu dem mindestens einen anderen Computergerät herstellen und die Daten an das mindestens eine andere Computergerät senden. Dort kann das mindestens eine andere Rechengerät die Daten analysieren. Nachdem die Daten analysiert wurden, kann das Prüfgerät die analysierten Daten von dem mindestens einen anderen Computergerät empfangen.

Aus der US 2009 / 0 276 486 A1 ist ein Verfahren zum Erzeugen von Konfigurationen von Feldgeräten bekannt. Das Verfahren umfasst das Empfangen eines ersten vorgeschlagenen Werts oder Attributs für einen Parameter, der einem Feldgerät zugeordnet ist. Das Feldgerät ist bzw. wird in einem Prozessleitsystem eingesetzt. Das Verfahren umfasst auch das Bestimmen, ob der erste vorgeschlagene Wert oder das erste vorgeschlagene Attribut gültig ist, unter Verwendung einer Gerätebeschreibung, die dem Feldgerät zugeordnet ist. Das Verfahren umfasst weiterhin, wenn der erste vorgeschlagene Wert oder das erste vorgeschlagene Attribut nicht gültig ist, das Empfangen eines zweiten vorgeschlagenen Werts oder Attributs für den mit dem Feldgerät verknüpften Parameter und das Bestimmen, ob der zweite vorgeschlagene Wert oder das zweite vorgeschlagene Attribut gültig ist. Die Feststellung, ob die ersten und zweiten vorgeschlagenen Werte oder Attribute gültig sind, könnte erfolgen, wenn das Feldgerät im Prozesssteuerungssystem offline ist. Das Verfahren könnte ferner das Empfangen einer Konfiguration mit mehreren Werten oder Attributen für mehrere mit dem Feldgerät verknüpfte Parameter und die Validierung mindestens einiger dieser Werte oder Attribute umfassen.

Aus der US 2004 / 0 138 840 A1 ist ein Verfahren zur Überwachung der täglichen Betriebsleistungsparameter für Wasseraufbereitungsprozesse durch die Erfassung lokaler Daten bekannt. Die Daten werden manipuliert, um vorkonfigurierte Leistungs-, Wartungs- und Qualitätssicherungsberichte zu erstellen und darüber hinaus die automatische Übermittlung von Daten zu ermöglichen, die für die behördliche Überprüfung bestimmter Wasseraufbereitungssysteme wie der Trinkwasseraufbereitung erforderlich sind. Die Daten werden von Sensoren an einem Gerätestandort gesammelt und über das Internet an einen entfernten Computer übertragen. Darüber hinaus sind alle empfangenen und zur Erstellung von Berichten verwendeten Daten auch über eine Internetverbindung zugänglich und werden ohne zusätzliche Zusatzkosten direkt an die Regulierungsbehörde übermittelt.

Der Erfindung liegt die Aufgabe zu Grunde, ein Verfahren und ein System zum Bereitstellen von Daten für mindestens einen Datenempfänger zu schaffen, bei denen ein Konfigurieren einer Daten erzeugenden Funktion verbessert durchgeführt werden kann.

Die Aufgabe wird erfindungsgemäß durch ein Verfahren mit den Merkmalen des Patentanspruchs 1 und ein System mit den Merkmalen des Patentanspruchs 9 gelöst. Vorteilhafte Ausgestaltungen der Erfindung ergeben sich aus den Unteransprüchen.

Insbesondere wird ein Verfahren zum Bereitstellen von Daten für mindestens einen Datenempfänger zur Verfügung gestellt, wobei die Daten mittels mindestens einer Funktion einer Datenbereitstellungseinrichtung erzeugt werden, wobei die mindestens eine Funktion auf Grundlage von mindestens einem Konfigurationsparameter konfiguriert werden kann, umfassend die folgenden Schritte: Erstellen einer Konfiguration für die mindestens eine Funktion durch Vorgeben des mindestens einen Konfigurationsparameters mittels einer Konfigurationseinrichtung eines Backendservers, Übermitteln der erstellten Konfiguration an die Datenbereitstellungseinrichtung mittels einer Schnittstelle des Backendservers, Empfangen der Konfiguration mittels einer Schnittstelle der Datenbereitstellungseinrichtung, Konfigurieren der mindestens einen Funktion auf Grundlage der empfangenen Konfiguration, Bereitstellen der mittels der konfigurierten mindestens einen Funktion erzeugten Daten über die Schnittstelle der Datenbereitstellungseinrichtung.

Ferner wird ein System zum Bereitstellen von Daten für mindestens einen Datenempfänger geschaffen, umfassend mindestens eine Datenbereitstellungseinrichtung, wobei die mindestens eine Datenbereitstellungseinrichtung mindestens eine Funktion zum Erzeugen von Daten umfasst, wobei die mindestens eine Funktion auf Grundlage von mindestens einem Konfigurationsparameter konfiguriert werden kann; und einen Backendserver, wobei der Backendserver eine Konfigurationseinrichtung und eine Schnittstelle umfasst, wobei die Konfigurationseinrichtung dazu eingerichtet ist, eine Konfiguration für die mindestens eine Funktion durch Vorgeben des mindestens einen Konfigurationsparameters zu erstellen und über die Schnittstelle an die zugehörige Datenbereitstellungseinrichtung zu übermitteln, und wobei die Datenbereitstellungseinrichtung eine Schnittstelle umfasst und dazu eingerichtet ist, die Konfiguration über die Schnittstelle zu empfangen, die mindestens eine Funktion auf Grundlage der empfangenen Konfiguration zu konfigurieren und die mittels der konfigurierten Funktion erzeugten Daten über die Schnittstelle bereitzustellen.

Es ist eine Grundidee der Erfindung, eine Konfiguration einer Funktion einer Datenbereitstellungseinrichtung mittels eines Backendservers vorzunehmen und die erstellte Konfiguration anschließend an die Datenbereitstellungseinrichtung zu übermitteln. In der Datenbereitstellungseinrichtung wird die Funktion dann entsprechend der übermittelten Konfiguration eingestellt bzw. konfiguriert. Das Übermitteln der Konfiguration der mindestens einen Funktion erfolgt hierbei erfindungsgemäß über eine Schnittstelle, welche für alle im System vorgesehenen Datenbereitstellungseinrichtungen bzw. deren Funktionen vereinheitlicht ist. Sämtliche im System vorhandenen Funktionen können dann über den Backendserver konfiguriert werden.

Der Vorteil der Erfindung ist, dass das Konfigurieren der mindestens einen Funktion deutlich flexibler ausgestaltet werden kann. Insbesondere können Konfigurationen flexibel vorgegeben bzw. geändert werden. Das Bereitstellen von Daten für den mindestens einen Datenempfänger kann daher verbessert durchgeführt werden. Das Verfahren und das System bieten den Vorteil, dass eine Vielzahl von unterschiedlichen Funktionen in unterschiedlichen Datenbereitstellungeinrichtungen zu einem System zusammengefasst werden können. Auch eine Anpassung einer Konfiguration einer Funktion, beispielsweise an geänderte gesetzliche Vorgaben, kann einfacher durchgeführt werden.

Eine Funktion, welche auch als Dienst bezeichnet werden kann, soll insbesondere Daten erfassen bzw. Daten erzeugen und bereitstellen können. Beispiele für eine Funktion sind eine Datenerfassung, beispielsweise eine Positionserfassung, eine Geschwindigkeitserfassung, eine Messwerterfassung etc. Eine Funktion kann aber auch eine Speicherfunktion zum Speichern von Daten sein. Funktionen können auch komplexer ausgebildet sein, so kann eine Funktion beispielsweise auch Berechnungen durchführen oder mehrere Daten oder Messwerte zusammenführen oder miteinander kombinieren. Handelt es sich bei der Datenbereitstellungseinrichtung um ein Fahrzeug, so kann die Funktion auch eine Datenabfrage auf einem Bussystem (z.B. CAN-Bus) des Fahrzeugs sein, die Funktion dient dann als Gateway zum Bussystem. Eine Funktion kann durch mindestens einen Konfigurationsparameter konfiguriert werden, wobei der mindestens eine Funktionsparameter eine Funktionsweise der Funktion bestimmt. Ein Konfigurationsparameter ist beispielsweise eine Frequenz, mit der Messdaten erfasst werden oder mit der Daten einem Datenempfänger bereitgestellt werden (z.B. 1x pro Minute, 1x pro Sekunde etc.). Ein Konfigurationsparameter ist beispielsweise ferner eine Sensoreinstellung eines Sensors, mit dem Daten erzeugt oder erfasst werden. Ein Konfigurationsparameter kann aber auch ein Schwellenwert sein, beispielsweise für eine Geschwindigkeit, oberhalb derer die Funktion Daten bereitstellen soll. Auch eine Speicherzeit für das Speichern von Daten durch eine Funktion kann ein solcher Konfigurationsparameter sein. Ferner kann ein Konfigurationsparameter auch angeben, ob Daten gespeichert werden sollen oder ob die Daten sofort übermittelt werden sollen.

Eine Datenbereitstellungseinrichtung kann ein Fahrzeug, ein Smartphone oder eine Steuerung sein, mit der Daten erzeugt und/oder erfasst werden können. Eine Datenbereitstellungseinrichtung kann auch als Dongle ausgebildet sein, welches Daten erzeugen und/oder erfassen und bereitstellen kann.

Es kann vorgesehen sein, dass die mindestens eine Datenbereitstellungseinrichtung eine Steuerungseinrichtung aufweist, welche eine Kommunikation über die Schnittstelle und das Konfigurieren der mindestens einen Funktion koordiniert. Insbesondere konfiguriert die Steuerungseinrichtung die mindestens eine Funktion auf Grundlage der über die Schnittstelle empfangenen Konfiguration, beispielsweise, indem der mindestens eine Konfigurationsparameter der mindestens einen Funktion entsprechend der Konfiguration gesetzt wird.

Es kann vorgesehen sein, dass eine Datenbereitstellungseinrichtung mehr als nur eine Funktion aufweist. Dies können hinsichtlich eines Funktionsumfangs unterschiedlich ausgebildete Funktionen sein. Es kann jedoch auch vorgesehen sein, dass die Funktionen vom Aufbau her die gleichen sind, sich jedoch in einer Konfiguration unterscheiden, das heißt mit unterschiedlichen Konfigurationsparametern betrieben werden.

Der Backendserver muss nicht als ein einzelner, physisch ausgebildeter Server ausgebildet sein. Es kann insbesondere vorgesehen sein, dass der Backendserver in einer Cloud ausgebildet ist.

Die Schnittstellen können sowohl als Hardware als auch als Software oder als eine Kombination von Hardware und Software ausgebildet sein. Insbesondere sollen die Schnittstellen dazu geeignet sein, einen einheitlichen und insbesondere generisch verwendbaren Kommunikationskanal zur Verfügung stellen, über den verschiedene Funktionen unterschiedlicher Datenbereitstellungseinrichtungen (Fahrzeuge, Smartphones, Dongles, Embedded Systems, Steuerungen etc.) konfiguriert werden können. Insbesondere können über die Schnittstellen sowohl Metadaten übertragen werden, welche die mindestens eine Funktion hinsichtlich eines Funktionsumfanges und des mindestens einen Konfigurationsparameters einheitlich beschreiben. Darüber hinaus werden auch die erzeugten Daten selbst über die Schnittstellen übertragen. Hierbei fungieren die Schnittstellen als Tunnel, um die Daten von außen nicht einsehbar beispielsweise von einer Datenbereitstellungseinrichtung zum Backendserver zu übermitteln.

Es ist vorgesehen, dass beim oder nach dem Erstellen der Konfiguration für die mindestens eine Funktion mittels einer Überprüfungseinrichtung überprüft wird, ob die erstellte Konfiguration und/oder ob das Bereitstellen von Daten an den mindestens einen Datenempfänger zulässig ist. Es wird hierbei überprüft, ob die Daten, die die mindestens eine Funktion nach dem Konfigurieren bereitstellt, die Datenbereitstellungseinrichtung verlassen und an den mindestens einen Datenempfänger übermittelt werden dürfen.

Das Überprüfen erfolgt insbesondere nach dem Erstellen der Konfiguration für die mindestens eine Funktion in dem Backendserver. Hierzu umfasst der Backendserver eine Überprüfungseinrichtung. Beim Überprüfen werden insbesondere Vorgaben hinsichtlich einer Art und eines Umfangs der nach dem Konfigurieren der mindestens einen Funktion bereitgestellten Daten berücksichtigt. Es wird überprüft, ob die Daten, die die mindestens eine Funktion nach dem Konfigurieren bereitstellt, die Datenbereitstellungseinrichtung verlassen und an den mindestens einen Datenempfänger übermittelt werden dürfen. Hierdurch kann trotz der zur Verfügung gestellten Flexibilität beim Bereitstellen und Konfigurieren der mindestens einen Funktion ein Datenschutz durch ein "Privacy by Design" gewährleistet werden.

Das Überprüfen kann zusätzlich oder alternativ auch in der Datenbereitstellungeinrichtung erfolgen. Hierzu umfasst die Datenbereitstellungseinrichtung eine Überprüfungseinrichtung. Dies kann sowohl vor dem Konfigurieren der mindestens einen Funktion erfolgen als auch nach dem Konfigurieren der mindestens einen Funktion. Das Überprüfen nach dem Konfigurieren ermöglicht es, zu jedem Zeitpunkt eine Konfiguration auf ihre Zulässigkeit hin zu überprüfen. Insbesondere können hierdurch auch sich ändernde Bedingungen, beispielsweise geänderte Vorgaben oder Einschränkungen in Bezug auf die Daten, die eine Funktion bereitstellen darf, berücksichtigt werden. Ein Datenschutz kann hierdurch deutlich verbessert gewährleistet werden.

Es können auch mehrere Überprüfungseinrichtungen vorgesehen sein. Diese können sowohl hinsichtlich der Funktionen als auch eines Prüfungsinhalts in gleicher oder in unterschiedlicher Weise ausgebildet sein.

Das Überprüfen ermöglicht es, einer Vielzahl von unterschiedlichen Datenempfängern maßgeschneiderte Daten auf datenschutzkonforme Weise bereitzustellen. Das Bereitstellen der Daten ist hierdurch deutlich verbessert. Das System stellt hierbei eine Art Wächterfunktion bereit, sodass nur Daten an einen Datenempfänger übermittelt werden, die hierfür auch vorgesehen sind.

Es kann hierbei vorgesehen sein, dass die mindestens eine Funktion vor dem Bereitstellen von Daten an einen Datenempfänger eine Anfrage stellt, ob diese Daten diesem Datenempfänger bereitgestellt werden dürfen. Die Anfrage wird insbesondere von einer Steuerungseinrichtung der Datenbereitstellungseinrichtung bearbeitet und beantwortet. Nur wenn die Anfrage ergibt, dass die Funktion diese Daten an den Datenempfänger bereitstellen darf, werden die Daten an den Datenempfänger übermittelt. Anderenfalls wird das Bereitstellen der Daten verhindert.

In einer Ausführungsform ist vorgesehen, dass die mindestens eine Funktion bei der Konfigurationseinrichtung des Backendservers registriert wird, wobei der zugehörige mindestens eine Konfigurationsparameter der mindestens einen Funktion der Konfigurationseinrichtung im Rahmen der Registrierung mitgeteilt wird. Dies ermöglicht das flexible Hinzufügen von Funktionen zum System. Soll eine neue Funktion hinzugefügt werden, so werden Metadaten der neuen Funktion, welche insbesondere einen Funktionsumfang und den mindestens einen Konfigurationsparameter umfassen, an die Konfigurationseinrichtung übergeben. Sämtliche Funktionen, die registriert sind, stehen dann für eine Konfiguration zur Verfügung. Insbesondere kann vorgesehen sein, dass eine Datenbereitstellungseinrichtung eine solche Registrierung einer neuen Funktion mit dem Funktionsumfang und den zugehörigen Konfigurationsparametern beim Backendserver bzw. der Konfigurationseinrichtung des Backendservers vornimmt oder eine Registrierung bei diesem beantragt. Durch die Möglichkeit einer Registrierung können auf einfache Weise neue Funktionen hinzugefügt und nicht mehr benötigte oder nicht mehr gewünschte Funktionen gelöscht werden.

In einer weiteren Ausführungsform ist vorgesehen, dass eine Konfiguration der mindestens einen Funktion durch die Datenbereitstellungseinrichtung bei dem Backendserver abgefragt wird. Dies kann beispielsweise erfolgen, wenn eine Funktion das erste Mal in der mindestens einen Datenbereitstellungseinrichtung verwendet wird. Die mindestens eine Datenbereitstellungeinrichtung fragt dann bei dem Backendserver eine Konfiguration für diese Funktion ab. Handelt es sich bei der Funktion beispielsweise um eine Messdatenerfassung und ist der Konfigurationsparameter dieser Funktion eine Frequenz der Erfassung, so wird beim Backendserver zumindest diese Frequenz als Konfiguration abgefragt.

In einer weiterbildenden Ausführungsform ist vorgesehen, dass das Überprüfen der Zulässigkeit auf Grundlage einer Nutzerpräferenz erfolgt. Insbesondere kann vorgesehen sein, dass eine Nutzerpräferenz, beispielsweise in Form eines Nutzerprofils, in der Überprüfungseinrichtung hinterlegt wird oder hinterlegt ist. Die Nutzerpräferenz gibt beispielsweise vor, welche Daten der Nutzer bereit ist, bereitzustellen. Handelt es sich bei einer Bereitstellungseinrichtung beispielsweise um ein Fahrzeug und eine zugehörige Funktion stellt beispielsweise Positionsdaten des Fahrzeugs als Daten für einen Datenempfänger bereit, so kann die Nutzerpräferenz vorsehen, dass lediglich Positionsdaten mit einem Alter von einer Woche bereitgestellt werden, sodass ein aktueller Aufenthaltsort des Fahrzeugs sich hieraus nicht ermitteln lässt. Das Nutzerprofil kann auch in Abhängigkeit des Datenempfängers variieren, beispielsweise können zu verschiedenen Datenempfängern oder verschiedenen Arten oder Klassen von Datenempfängern jeweils unterschiedliche Nutzerpräferenzen in Form von empfängerabhängigen Nutzerprofilen hinterlegt sein. Im obigen Beispiel bereitgestellter Positionsdaten des Fahrzeugs kann beispielsweise vorgesehen sein, dass einem kommerziellen Dienst nur ältere Positionsdaten bereitgestellt werden dürfen, einem Halter des Fahrzeugs jedoch auch aktuelle Positionsdaten. Die Nutzerpräferenz kann auch gesetzliche oder länderspezifische Vorgaben umfassen.

In einer weiteren Ausführungsform ist vorgesehen, dass die mittels der mindestens einen Funktion bereitgestellten Daten vor dem Bereitstellen anonymisiert werden. Beispielsweise können von einer Vielzahl von Datenbereitstellungseinrichtungen, beispielsweise Fahrzeugen, anonymisierte Positionsdaten einem Verkehrsleitsystem als Datenempfänger bereitgestellt werden, um hierdurch beispielsweise eine Stauerkennung zu verbessern. Das Anonymisieren kann durch eine Anonymisierungseinrichtung der Datenbereitstellungseinrichtung erfolgen. Diese entfernt individualisierende Informationen aus den bereitgestellten Daten.

In einer weiteren Ausführungsform ist vorgesehen, dass die erstellte Konfiguration vor dem Übermitteln verschlüsselt und/oder signiert wird. Dies erhöht die Sicherheit beim Übermitteln der Konfiguration. Es kann hierzu eine separate Verschlüsselungs- und/oder Signierungseinrichtung vorgesehen sein. Es kann jedoch auch vorgesehen sein, dass die Schnittstellen das Verschlüsseln und/oder das Signieren durchführen.

In einer Ausführungsform ist vorgesehen, dass der mindestens eine Datenempfänger eine Konfiguration für die mindestens eine Funktion vorschlägt. Beispielsweise kann vorgesehen sein, dass ein potentieller Datenempfänger an den Backendserver eine Anfrage für bestimmte Daten stellt, beispielsweise Positionsdaten von Fahrzeugen auf einem bestimmten Autobahnabschnitt. Der Backendserver kann dann eine Konfiguration für eine entsprechend ausgebildete Funktion erzeugen und an die mindestens eine Datenbereitstellungseinrichtung übermitteln. Gegebenenfalls wird vorher die Zulässigkeit der vorgeschlagenen bzw. angefragten Konfiguration überprüft.

In einer Ausführungsform ist vorgesehen, dass das Bereitstellen der Daten ein Weiterleiten der Daten über den Backendserver an den mindestens einen Datenempfänger umfasst. Hierdurch kann das Bereitstellen der Daten an den mindestens einen Datenempfänger zentralisiert durchgeführt werden.

Teile des Systems können einzeln oder zusammengefasst als eine Kombination von Hardware und Software ausgebildet sein, beispielsweise als Programmcode, der auf einem Mikrocontroller oder Mikroprozessor ausgeführt wird.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform des Systems zum Bereitstellen von Daten für mindestens einen Datenempfänger;
- Fig. 2: eine schematische Darstellung einer weiteren Ausführungsform des Systems zum Bereitstellen von Daten für mindestens einen Datenempfänger.

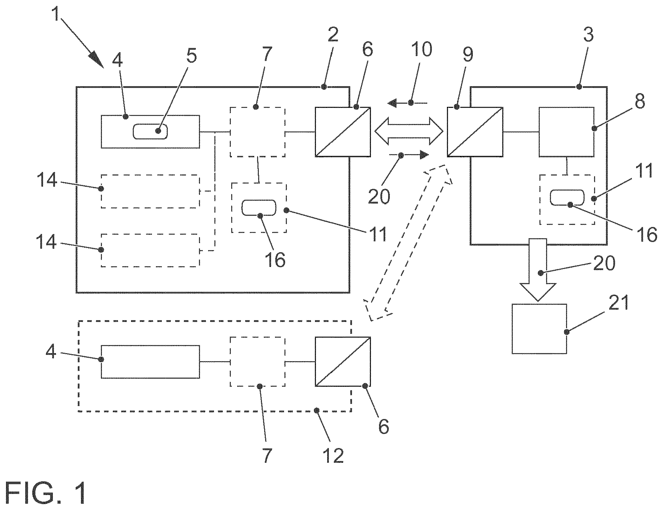

In Fig. 1 ist eine schematische Darstellung einer Ausführungsform des Systems 1 zum Bereitstellen von Daten 20 für mindestens einen Datenempfänger 21 gezeigt. Das System umfasst eine Datenbereitstellungeinrichtung 2 und einen Backendserver 3.

Die Datenbereitstellungseinrichtung 2 umfasst eine Funktion 4, welche beispielsweise Positionsdaten erzeugt und bereitstellt. Diese Funktion 4 ist beispielsweise in einer hierfür eingerichteten Steuerung mit einem Mikrocontroller als Programmcode umgesetzt. Die Funktion 4 kann auf Grundlage von mindestens einem Konfigurationsparameter 5 konfiguriert werden. Ein Konfigurationsparameter 5 ist beispielsweise eine Ortsauflösung bei der Positionsbestimmung, eine Frequenz, mit der eine Position bereitgestellt wird oder ein Alter der Positionsdaten. Die Datenbereitstellungseinrichtung 2 umfasst ferner eine Schnittstelle 6 und eine Steuerungseinrichtung 7.

Der Backendserver 3 umfasst eine Konfigurationseinrichtung 8 und eine Schnittstelle 9. Die Konfigurationseinrichtung 8 erstellt eine Konfiguration 10 für die Funktion 4 der Datenbereitstellungseinrichtung 2 durch Vorgeben des mindestens einen Konfigurationsparameters 5 und übermittelt die erstellte Konfiguration 10 über die Schnittstelle 9 an die Datenbereitstellungseinrichtung 2.

Die Datenbereitstellungseinrichtung 2 empfängt die übermittelte Konfiguration 10 über die Schnittstelle 6 und konfiguriert die Funktion 4 auf Grundlage der empfangenen Konfiguration 10 mittels der Steuerungseinrichtung 7, welche eine Kommunikation über die Schnittstelle 6 koordiniert und das Konfigurieren der Funktion 4 durchführt.

Anschließend werden die mittels der in der Konfiguration 10 konfigurierten Funktion 4 erzeugten Daten 20 über die Schnittstelle 6 der Datenbereitstellungseinrichtung 2 bereitgestellt. Die Daten 20 werden über den Backendserver 3 an den mindestens einen Datenempfänger 21 weitergeleitet. Der mindestens eine Datenempfänger 21 kann die übermittelten Daten 20 dann weiterverarbeiten, beispielsweise zur Analyse auswerten.

Das System 1 ermöglicht das flexible Konfigurieren einer Funktion 4 in einer Datenbereitstellungseinrichtung 2. Insbesondere kann die Funktion 4 flexibel umkonfiguriert werden.

Es kann vorgesehen sein, dass die Datenbereitstellungseinrichtung 2 weitere Funktionen 14 umfasst. Diese werden dann auf die gleiche Weise konfiguriert.

Ferner kann das System auch weitere Datenbereitstellungseinrichtungen 12 umfassen. Die weiteren Datenbereitstellungseinrichtungen sind prinzipiell wie die

Datenbereitstellungseinrichtung 2 aufgebaut. Auch eine Funktion 4 der weiteren Datenbereitstellungseinrichtung 12 wird wie beschrieben mittels der Konfigurationseinrichtung 8 des Backendservers 3 konfiguriert.

Es kann vorgesehen sein, dass eine Funktion 4, 14 bei der Konfigurationseinrichtung 8 des Backendservers 3 registriert wird, wobei ein Funktionsumfang und der zugehörige mindestens eine Konfigurationsparameter 5 der Funktion 4, 14 der Konfigurationseinrichtung 8 im Rahmen der Registrierung mitgeteilt wird. Dies erfolgt in Form von Metadaten.

Ferner kann vorgesehen sein, dass eine Konfiguration 10 der Funktion 4, 14 durch die Datenbereitstellungseinrichtung 2 bei dem Backendserver 3 abgefragt wird. Dies erfolgt insbesondere, wenn der Datenbereitstellungseinrichtung 2 keine Konfiguration 10 für die Funktion 4, 14 vorliegt. Ferner kann dies auch in regelmäßigen Abständen oder bei bestimmten Ereignissen erfolgen. Beispielsweise kann bei jedem Fahrzeugstart eine aktuelle Konfiguration 10 beim Backendserver 3 abgefragt werden.

Es ist vorgesehen, dass beim oder nach dem Erstellen der Konfiguration 10 für die Funktion 4, 14 mittels einer Überprüfungseinrichtung 11 überprüft wird, ob die erstellte Konfiguration 10 und/oder ob das Bereitstellen von Daten 20 an den mindestens einen Datenempfänger 21 zulässig ist. Die Überprüfungseinrichtung 11 kann sowohl in der Datenbereitstellungeinrichtung 2 als auch in dem Backendserver 3 ausgebildet sein.

Es kann hierbei vorgesehen sein, dass das Überprüfen der Zulässigkeit auf Grundlage einer Nutzerpräferenz 16 erfolgt. Diese Nutzerpräferenz 16 ist beispielsweise in der jeweiligen Überprüfungseinrichtung 11 hinterlegt. Die Nutzerpräferenz 16 gibt hierbei an, welche Daten 20 ein Nutzer freigegeben hat bzw. welche Daten 20 nach Art und Umfang dem mindestens einen Datenempfänger 21 bereitgestellt werden dürfen. Durch das Überprüfen auf Grundlage der Nutzerpräferenz 16 können datenschutzrechtliche Vorgaben im Rahmen eines "Privacy by Design" verbessert berücksichtigt werden.

Weiter kann vorgesehen sein, dass die mittels der mindestens einen Funktion bereitgestellten Daten vor dem Bereitstellen anonymisiert werden. Die erfolgt beispielsweise in der Steuerungseinrichtung 7 der Datenbereitstellungseinrichtung 2. Auf diese Weise können z.B. Daten 20 einer Vielzahl von Datenbereitstellungseinrichtungen 2, 12 als anonymisierte Schwarmdaten bereitgestellt werden.

Es kann auch vorgesehen sein, dass die erstellte Konfiguration 10 vor dem Übermitteln verschlüsselt und/oder signiert wird. Hierzu umfasst der Backendserver 3 beispielsweise eine Verschlüsselungs- und Signierungseinrichtung (nicht gezeigt). Komplementär hierzu umfassen die Datenbereitstellungseinrichtung 2, 12 eine zugehörige Entschlüsselungs- und Signaturüberprüfungseinrichtung (nicht gezeigt).

Es kann ferner vorgesehen sein, dass der mindestens eine Datenempfänger 21 eine Konfiguration 10 für eine Funktion 4, 14 vorschlägt. Hierbei stellt der mindestens eine Datenempfänger 21 beispielsweise eine Anfrage für Daten 20, die er wünscht, bereitgestellt zu bekommen. Sind dem mindestens einen Datenempfänger 21 Funktionen 4, 14 nach ihrer Art und ihrem Funktionsumfang bekannt, so kann er gezielt eine Konfiguration 10 für eine der Funktionen 4, 14 vorschlagen, die die gewünschten Daten 20 bereitstellt.

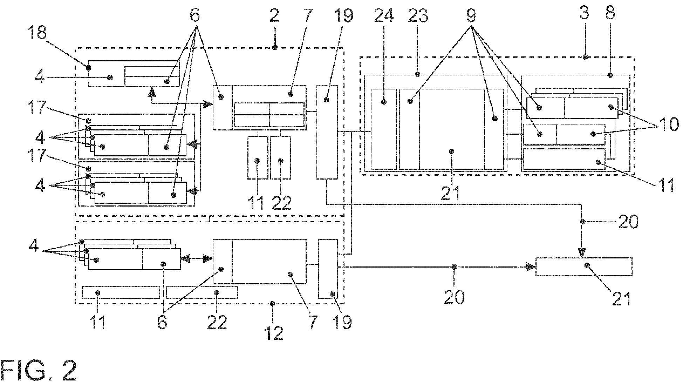

In Fig. 2 ist eine schematische Darstellung einer weiteren Ausführungsform des Systems 1 zum Bereitstellen von Daten 20 für mindestens einen Datenempfänger 21 gezeigt. Das System 1 umfasst in der dargestellten Ausführungsform eine Datenbereitstellungseinrichtung 2 und eine weitere Datenbereitstellungseinrichtung 12. Die Datenbereitstellungseinrichtung 2 ist als Fahrzeug ausgebildet, die weitere Datenbereitstellungseinrichtung 12 ist als App auf einem Smartphone ausgebildet.

Die als Fahrzeug ausgebildete Datenbereitstellungseinrichtung 2 umfasst zwei Steuereinheiten 17 und einen Gateway 18 zu einem CAN-Bus des Fahrzeugs. Jede der Steuereinheiten 17 und das Gateway 18 umfassen jeweils mehrere Funktionen 4. Die Funktionen 4 können über eine Schnittstelle 6 kommunizieren. Über die Funktionen 4 des Gateway 18 kann beispielsweise ein Fahrzeugzustand abgefragt werden. Eine Funktion 4 des Gateway 18 kann beispielsweise einen Zustand einer Fahrertür des Fahrzeugs als Daten (z.B. "Tür geöffnet"/"Tür geschlossen") bereitstellen.

Die als Smartphone ausgebildete Datenbereitstellungseinrichtung 12 umfasst mehrere Apps, welche mehrere Funktionen 4 bereitstellen. Die Funktionen 4 der Apps können über eine Schnittstelle 6 kommunizieren.

Die Datenbereitstellungseinrichtungen 2, 12 umfassen ferner jeweils eine Steuerungseinrichtung 7 welche eine Kommunikation über die Schnittstelle 6 koordiniert und ein Konfigurieren der Funktionen 4 steuert. Ferner umfassen die Datenbereitstellungseinrichtungen 2, 12 jeweils eine Überprüfungseinrichtung 11, welche auf Grundlage einer Nutzerpräferenz überprüfen, ob Konfigurationen für die Funktionen 4 zulässig sind, und Entschlüsselungseinrichtungen 22 zum Entschlüsseln von verschlüsselten Konfigurationen 10.

Ein Datenaustausch zwischen den Datenbereitstellungseinrichtungen 2, 12 und dem Backendserver 3 erfolgt über hierfür vorgesehene Verbindungseinheiten 19.

Der Backendserver 3 umfasst eine Konfigurationseinrichtung 8, in der für dort registrierte Funktionen 4 der Datenbereitstellungseinrichtungen 2, 12 Konfigurationen 10 erstellt werden können. Ferner umfasst der Backendserver 3 ebenfalls eine Überprüfungseinrichtung 11 und einen Verbindungsblock 23, der eine Verbindungseinheit 24 und eine Verschlüsselungs- und Signierungseinrichtung 21 aufweist.

Die Konfigurationseinrichtung 8 und der Verbindungsblock 23 kommunizieren über eine Schnittstelle 9. Die Verbindungseinheiten 19, 24 kommunizieren beispielsweise über das Message Queuing Telemetry Transport-(MQTT)-Protokoll und das Hypertext Transfer Protocol-(HTTP)-Protokoll miteinander.

Ein beispielhafter Ablauf des Verfahrens wird nachfolgend anhand des in Fig. 2 gezeigten Systems 1 beschrieben.

Zuerst werden die Funktionen 4 aktiviert und registrieren sich bei dem Backendserver 3. Hierzu werden beispielsweise ein Funktionsumfang und mindestens ein Konfigurationsparameter der Funktionen 4 in Form von Metadaten über die Schnittstellen 6, 9 an die Konfigurationseinrichtung 8 des Backendservers 3 übermittelt. Die Funktionen 4 werden dort auf Grundlage der übermittelten Metadaten registriert, der Backendserver 3 bzw. die Konfigurationseinrichtung 8 kennt nun den Funktionsumfang und die Konfigurationsparameter der registrierten Funktionen.

Kann in einer der Datenbereitstellungseinrichtungen 2, 12 von der jeweiligen Steuerungseinrichtung 7 keine Konfiguration 10 für eine Funktion 4 bereitgestellt werden, so wird eine Anfrage an die Konfigurationseinrichtung 8 des Backendservers 3 gestellt.

Die Konfigurationseinrichtung 8 erstellt anschließend eine Konfiguration 10 auf Grundlage des hinterlegten mindestens einen Konfigurationsparameters der entsprechenden Funktion 4. Die Überprüfungseinrichtung 11 des Backendservers 3 überprüft auf Grundlage einer Nutzerpräferenz, ob die erstellte Konfiguration 10 zulässig ist. Hierzu wird insbesondere überprüft, ob ein Nutzer einem Bereitstellen der Daten 20 gemäß der Konfiguration 10 der Funktion 4 zugestimmt hat. Sofern die erstellte Konfiguration 10 zulässig ist, wird die erstellte Konfiguration 10 an die Verschlüsselungs- und Signierungseinrichtung 21 weitergeleitet.

In der Verschlüsselungs- und Signierungseinrichtung 21 wird die Konfiguration 10 verschlüsselt und signiert.

Nach dem Verschlüsseln und Signieren wird die Konfiguration 10 beispielsweise in Form einer MQTT/HTTP-Nachricht an die anfordernde Datenbereitstellungseinrichtung 2 übermittelt. Hardwareseitig erfolgt das Übermitteln über die Verbindungseinheiten 19, 24.

In der Datenbereitstellungseinrichtung 2 wird die empfangene Konfiguration 10 in der Entschlüsselungseinrichtung 22 entschlüsselt und auf ihre Signatur hin überprüft. Anschließend kann mittels der Überprüfungseinrichtung 11 der Datenbereitstellungseinrichtung 2 erneut auf Grundlage eines Nutzerprofils überprüft werden, ob die empfangene Konfiguration 10 zulässig ist.

Die Konfiguration 10 wird dann von der Steuerungseinrichtung 7 an die zugehörige Funktion 4 weitergeleitet bzw. diese Funktion 4 wird von der Steuerungseinrichtung 7 gemäß der Konfiguration 10 durch Setzen des oder der Konfigurationsparameter der Funktion 4 konfiguriert.

Die konfigurierte Funktion 4 erzeugt dann gemäß den Vorgaben der Konfiguration 10 Daten 20 und stellt diese über die Schnittstelle 6 und die Steuerungseinrichtung 7 dem mindestens einen Datenempfänger 21 bereit. Dies kann direkt (siehe Fig. 2) oder durch Weiterleiten über den Backendserver erfolgen (nicht gezeigt).

Es kann hierbei vorgesehen sein, das vor dem Bereitstellen der von der Funktion 4 erzeugten Daten 20 erneut mittels der Überprüfungseinrichtung 11 überprüft wird, ob die Daten 20 gemäß der Nutzerpräferenz bereitgestellt werden dürfen oder nicht. Nur wenn diese Daten 20 bereitgestellt werden dürfen, werden die Daten 20 an den mindestens einen Datenempfänger 21 weitergeleitet.

Es kann vorgesehen sein, dass die Funktionen 4 auch untereinander kommunizieren können, beispielsweise um einen größeren Funktionsumfang durch Kombinationen von Messewerten, die mittels verschiedener Funktionen 4 erfasst wurden bzw. von dem Gateway 18 bereitgestellt wurden, bereitstellen zu können.

### Bezugszeichenliste

- 1: System
- 2: Datenbereitstellungseinrichtung
- 3: Backendserver
- 4: Funktion
- 5: Konfigurationsparameter
- 6: Schnittstelle
- 7: Steuerungseinrichtung
- 8: Konfigurationseinrichtung
- 9: Schnittstelle
- 10: Konfiguration
- 11: Überprüfungseinrichtung
- 12: Datenbereitstellungseinrichtung
- 14: weitere Funktion
- 16: Nutzerpräferenz
- 17: Steuereinheit
- 18: Gateway
- 19: Verbindungseinheit
- 20: Daten
- 21: Datenempfänger
- 29: Verbindungsblock
- 30: Verbindungseinheit

## Patentansprüche

1. Verfahren zum Bereitstellen von Daten (20) für mindestens einen Datenempfänger (21), wobei die Daten (20) mittels mindestens einer Funktion (4, 14) einer Datenbereitstellungseinrichtung (2, 12) erzeugt werden, wobei die mindestens eine Funktion (4, 14) auf Grundlage von mindestens einem Konfigurationsparameter (5) konfiguriert werden kann, umfassend die folgenden Schritte:
Erstellen einer Konfiguration (10) für die mindestens eine Funktion (4, 14) durch Vorgeben des mindestens einen Konfigurationsparameters (5) mittels einer Konfigurationseinrichtung (8) eines Backendservers (3),
Übermitteln der erstellten Konfiguration (10) an die Datenbereitstellungseinrichtung (2, 12) mittels einer Schnittstelle (9) des Backendservers (3),
Empfangen der Konfiguration (10) mittels einer Schnittstelle (6) der Datenbereitstellungseinrichtung (2, 12),
Konfigurieren der mindestens einen Funktion (4, 14) auf Grundlage der empfangenen Konfiguration (10),
Bereitstellen der mittels der konfigurierten mindestens einen Funktion (4, 14) erzeugten Daten (20) über die Schnittstelle (6) der Datenbereitstellungseinrichtung (2, 12),
**dadurch gekennzeichnet, dass** beim oder nach dem Erstellen der Konfiguration (10) für die mindestens eine Funktion (4, 14) mittels mindestens einer Überprüfungseinrichtung (11) überprüft wird, ob die erstellte Konfiguration (10) und/oder ob das Bereitstellen von Daten (20) an den mindestens einen Datenempfänger (21) zulässig ist, wobei hierbei überprüft wird, ob die Daten (20), die die mindestens eine Funktion (4, 14) nach dem Konfigurieren bereitstellt, die Datenbereitstellungseinrichtung (2, 12) verlassen und an den mindestens einen Datenempfänger (21) übermittelt werden dürfen.

2. Verfahren nach Anspruch 1, **dadurch gekennzeichnet, dass** die mindestens eine Funktion (4, 14) bei der Konfigurationseinrichtung (8) des Backendservers (3) registriert wird, wobei der zugehörige mindestens eine Konfigurationsparameter (5) der mindestens einen Funktion (4, 14) der Konfigurationseinrichtung (8) im Rahmen der Registrierung mitgeteilt wird.

3. Verfahren nach Anspruch 1 oder 2, **dadurch gekennzeichnet, dass** eine Konfiguration (10) der mindestens einen Funktion (4, 14) durch die Datenbereitstellungseinrichtung (2, 12) bei dem Backendserver (3) abgefragt wird.

4. Verfahren nach einem der vorangegangenen Ansprüche, **dadurch gekennzeichnet, dass** das Überprüfen der Zulässigkeit auf Grundlage einer Nutzerpräferenz (16) erfolgt.

5. Verfahren nach einem der vorangegangenen Ansprüche, **dadurch gekennzeichnet, dass** die mittels der mindestens einen Funktion (4, 14) bereitgestellten Daten (20) vor dem Bereitstellen anonymisiert werden.

6. Verfahren nach einem der vorangegangenen Ansprüche, **dadurch gekennzeichnet, dass** die erstellte Konfiguration (10) vor dem Übermitteln verschlüsselt und/oder signiert wird.

7. Verfahren nach einem der vorangegangenen Ansprüche, **dadurch gekennzeichnet, dass** der mindestens eine Datenempfänger (21) eine Konfiguration (10) für die mindestens eine Funktion (4, 14) vorschlägt.

8. Verfahren nach einem der vorangegangenen Ansprüche, **dadurch gekennzeichnet, dass** das Bereitstellen der Daten (20) ein Weiterleiten der Daten (20) über den Backendserver (3) an den mindestens einen Datenempfänger (21) umfasst.

9. System (1) zum Bereitstellen von Daten (20) für mindestens einen Datenempfänger (21), umfassend:
mindestens eine Datenbereitstellungseinrichtung (2, 12), wobei die mindestens eine Datenbereitstellungseinrichtung (2, 12) mindestens eine Funktion (4, 14) zum Erzeugen von Daten (20) umfasst, wobei die mindestens eine Funktion (4, 14) auf Grundlage von mindestens einem Konfigurationsparameter (5) konfiguriert werden kann, und
einen Backendserver (3),
wobei der Backendserver (3) eine Konfigurationseinrichtung (8) und eine Schnittstelle (9) umfasst, wobei die Konfigurationseinrichtung (8) dazu eingerichtet ist, eine Konfiguration (10) für die mindestens eine Funktion (4, 14) durch Vorgeben des mindestens einen Konfigurationsparameters (5) zu erstellen und über die Schnittstelle (9) an die zugehörige Datenbereitstellungseinrichtung (2, 12) zu übermitteln, und
wobei die Datenbereitstellungseinrichtung (2, 12) eine Schnittstelle (6) umfasst und dazu eingerichtet ist, die Konfiguration (10) über die Schnittstelle (6) zu empfangen, die mindestens eine Funktion (4, 14) auf Grundlage der empfangenen Konfiguration (10) zu konfigurieren und die mittels der konfigurierten Funktion (4, 14) erzeugten Daten (20) über die Schnittstelle (6) bereitzustellen,
**dadurch gekennzeichnet, dass**
der Backendserver (3) und/oder die mindestens eine Datenbereitstellungseinrichtung (2, 12) ferner mindestens eine Überprüfungseinrichtung (11) umfassen, wobei die mindestens eine Überprüfungseinrichtung (11) dazu eingerichtet ist, beim oder nach dem Erstellen der Konfiguration (10) für die mindestens eine Funktion (4, 14) zu überprüfen, ob die erstellte Konfiguration (10) und/oder ob das Bereitstellen von Daten (20) an den mindestens einen Datenempfänger (21) zulässig ist, wobei hierbei überprüft wird, ob die Daten (20), die die mindestens eine Funktion (4, 14) nach dem Konfigurieren bereitstellt, die mindestens eine Datenbereitstellungseinrichtung (2, 12) verlassen und an den mindestens einen Datenempfänger (21) übermittelt werden dürfen.

## Claims

1. Method for providing data (20) for at least one data receiver (21), the data (20) being generated by means of at least one function (4, 14) of a data provision device (2, 12), the at least one function (4, 14) being configurable on the basis of at least one configuration parameter (5), comprising the following steps:
creating a configuration (10) for the at least one function (4, 14) by specifying the at least one configuration parameter (5) by means of a configuration device (8) of a backend server (3),
transmitting the created configuration (10) to the data provision device (2, 12) by means of an interface (9) of the backend server (3),
receiving the configuration (10) by means of an interface (6) of the data provision device (2, 12),
configuring the at least one function (4, 14) on the basis of the received configuration (10),
providing the data (20) generated by means of the configured at least one function (4, 14) via the interface (6) of the data provision device (2, 12),
**characterized in that**
during or after the creation of the configuration (10) for the at least one function (4, 14), at least one checking device (11) is used to check whether the created configuration (10) and/or whether the provision of data (20) to the at least one data receiver (21) is permissible, the checking device in this case checking whether the data (20) which the at least one function (4, 14) provides after configuration may leave the data provision device (2, 12) and be transmitted to the at least one data receiver (21).

2. Method according to claim 1, **characterized in that** the at least one function (4, 14) is registered with the configuration device (8) of the backend server (3), the associated at least one configuration parameter (5) of the at least one function (4, 14) being communicated to the configuration device (8) as part of the registration.

3. Method according to claim 1 or 2, **characterized in that** a configuration (10) of the at least one function (4, 14) is requested by the data provision device (2, 12) from the backend server (3).

4. Method according to any of the preceding claims, **characterized in that** the check of the permissibility takes place on the basis of a user preference (16).

5. Method according to any of the preceding claims, **characterized in that** the data (20) provided by means of the at least one function (4, 14) are anonymized before being provided.

6. Method according to any of the preceding claims, **characterized in that** the created configuration (10) is encrypted and/or signed before being transmitted.

7. Method according to any of the preceding claims, **characterized in that** the at least one data receiver (21) suggests a configuration (10) for the at least one function (4, 14).

8. Method according to any of the preceding claims, **characterized in that** the provision of the data (20) comprises forwarding the data (20) via the backend server (3) to the at least one data receiver (21).

9. System (1) for providing data (20) for at least one data receiver (21), comprising:
at least one data provision device (2, 12), the at least one data provision device (2, 12) comprising at least one function (4, 14) for generating data (20), the at least one function (4, 14) being configurable on the basis of at least one configuration parameter (5), and
a backend server (3),
the backend server (3) comprising a configuration device (8) and an interface (9), the configuration device (8) being designed to create a configuration (10) for the at least one function (4, 14) by specifying the at least one configuration parameter (5), and to transmit said configuration to the associated data provision device (2, 12) via the interface (9), and
the data provision device (2, 12) comprising an interface (6) and being designed to receive the configuration (10) via the interface (6), to configure the at least one function (4, 14) on the basis of the received configuration (10) and to provide the data (20) generated by means of the configured function (4, 14) via the interface (6),
**characterized in that** the backend server (3) and/or the at least one data provision device (2, 12) further comprise at least one checking device (11), the at least one checking device (11) being designed to check, during or after the creation of the configuration (10) for the at least one function (4, 14), whether the created configuration (10) and/or whether the provision of data (20) to the at least one data receiver (21) is permissible, the checking device in this case checking whether the data (20) that the at least one function (4, 14) provides after configuration may leave the at least one data provision device (2, 12) and be transmitted to the at least one data receiver (21).

## Revendications

1. Procédé permettant de fournir des données (20) pour au moins un récepteur de données (21), dans lequel les données (20) sont générées au moyen d'au moins une fonction (4, 14) d'un dispositif de fourniture de données (2, 12), dans lequel l'au moins une fonction (4, 14) peut être configurée sur la base d'au moins un paramètre de configuration (5), comprenant les étapes suivantes :
création d'une configuration (10) pour l'au moins une fonction (4, 14) en prédéfinissant l'au moins un paramètre de configuration (5) au moyen d'un dispositif de configuration (8) d'un serveur dorsal (3),
transmission de la configuration (10) créée au dispositif de fourniture de données (2, 12) au moyen d'une interface (9) du serveur dorsal (3),
réception de la configuration (10) au moyen d'une interface (6) du dispositif de fourniture de données (2, 12),
configuration de l'au moins une fonction (4, 14) sur la base de la configuration (10) reçue,
fourniture des données (20) générées au moyen de l'au moins une fonction (4, 14) configurée par l'intermédiaire de l'interface (6) du dispositif de fourniture de données (2, 12),
**caractérisé en ce que**
pendant ou après la création de la configuration (10) pour l'au moins une fonction (4, 14), on vérifie au moyen d'au moins un dispositif de vérification (11) si la configuration (10) créée et/ou si la fourniture de données (20) à l'au moins un récepteur de données (21) sont admissibles, dans lequel on vérifie à cette occasion si les données (20) que l'au moins une fonction (4, 14) fournit après la configuration peuvent quitter le dispositif de fourniture de données (2, 12) et être transmises à l'au moins un récepteur de données (21).

2. Procédé selon la revendication 1, **caractérisé en ce que** l'au moins une fonction (4, 14) est enregistrée auprès du dispositif de configuration (8) du serveur dorsal (3), dans lequel l'au moins un paramètre de configuration (5) associé de l'au moins une fonction (4, 14) est communiqué au dispositif de configuration (8) dans le cadre de l'enregistrement.

3. Procédé selon la revendication 1 ou 2, **caractérisé en ce qu'**une configuration (10) de l'au moins une fonction (4, 14) est consultée par le dispositif de fourniture de données (2, 12) auprès du serveur dorsal (3).

4. Procédé selon l'une des revendications précédentes,
**caractérisé en ce que** la vérification de l'admissibilité est effectuée sur la base d'une préférence utilisateur (16).

5. Procédé selon l'une des revendications précédentes,
**caractérisé en ce que** les données (20) fournies au moyen de l'au moins une fonction (4, 14) sont rendues anonymes avant d'être fournies.

6. Procédé selon l'une des revendications précédentes,
**caractérisé en ce que** la configuration (10) créée est cryptée et/ou signée avant la transmission.

7. Procédé selon l'une des revendications précédentes,
**caractérisé en ce que** l'au moins un récepteur de données (21) propose une configuration (10) pour l'au moins une fonction (4, 14).

8. Procédé selon l'une des revendications précédentes,
**caractérisé en ce que** la fourniture des données (20) comprend un transfert des données (20) à l'au moins un récepteur de données (21) par l'intermédiaire du serveur dorsal (3).

9. Système (1) permettant de fournir des données (20) pour au moins un récepteur de données (21), comprenant :
au moins un dispositif de fourniture de données (2, 12), dans lequel l'au moins un dispositif de fourniture de données (2, 12) comprend au moins une fonction (4, 14) permettant de générer des données (20), dans lequel l'au moins une fonction (4, 14) peut être configurée sur la base d'au moins un paramètre de configuration (5), et
un serveur dorsal (3),
dans lequel le serveur dorsal (3) comprend un dispositif de configuration (8) et une interface (9), dans lequel le dispositif de configuration (8) est configuré pour créer une configuration (10) pour l'au moins une fonction (4, 14) en prédéfinissant l'au moins un paramètre de configuration (5) et pour la transmettre au dispositif de fourniture de données (2, 12) associé par l'intermédiaire de l'interface (9), et
dans lequel le dispositif de fourniture de données (2, 12) comprend une interface (6) et est configuré pour recevoir la configuration (10) par l'intermédiaire de l'interface (6), pour configurer l'au moins une fonction (4, 14) sur la base de la configuration (10) reçue et pour fournir les données (20) générées au moyen de la fonction (4, 14) configurée par l'intermédiaire de l'interface (6),
**caractérisé en ce que** le serveur dorsal (3) et/ou l'au moins un dispositif de fourniture de données (2, 12) comprennent en outre au moins un dispositif de vérification (11), dans lequel l'au moins un dispositif de vérification (11) est configuré pour vérifier, lors de la création ou après la création de la configuration (10) pour l'au moins une fonction (4, 14), si la configuration (10) créée et/ou si la fourniture de données (20) à l'au moins un récepteur de données (21) sont admissibles, dans lequel on vérifie à cette occasion si les données (20) que l'au moins une fonction (4, 14) fournit après la configuration peuvent quitter l'au moins un dispositif de fourniture de données (2, 12) et être transmises à l'au moins un récepteur de données (21).
